# EUROPÄISCHE PATENTANMELDUNG

(11) **EP 0 634 811 A1**
(43) Veröffentlichungstag der Anmeldung: **18.01.1995**
(21) Anmeldenummer: 94109586.1
(22) Anmeldetag: 21.06.1994
(51) Int. Cl.: H01R 4/30, F16B 31/02

(54) **Abscherschraube**

(30) Priorität: 13.07.1993 DE 4323434
(71) Anmelder: ARCUS ELEKTROTECHNIK ALOIS SCHIFFMANN GmbH, D-81673 München (DE)
(72) Erfinder: Klehe, Armin, D-85609 Aschheim (DE); Czernek, Georg, D-86415 Mering (DE)
(74) Vertreter: Sajda, Wolf E., Dipl.-Phys.

(57) **Zusammenfassung**

Eine Abscherschraube (10) hat einen Gewindekörper (14) mit einem Außengewinde (16) sowie einen Abreißkopf (12) mit einer Angriffsfläche für ein Werkzeug. Zwischen dem Gewindekörper (14) und dem Abreißkopf (12) befindet sich ein Übergangsbereich (20), der einen kleineren Außendurchmesser hat als der Gewindekörper (14) und der Abreißkopf (12). Der Übergangsbereich (20) verjüngt sich von dem Abreißkopf (12) zum Gewindekörper (14) in zunehmender Weise und endet in einer in Umfangsrichtung verlaufenden Abscherrille (22). Diese liegt tiefer als das dem Abreißkopf (12) zugewandte obere Ende (30) des Gewindekörpers (14). Die im Bereich der Abscherrille (22) entstehende Bruchfläche bringt somit bei der weiteren Handhabung keine Probleme mit sich.

## Beschreibung

Die Erfindung betrifft eine Abscherschraube, mit einem Gewindekörper mit einem Außengewinde, und mit einem Abreißkopf mit Angriffsfläche für ein Werkzeug, wobei sich zwischen dem Gewindekörper und dem Abreißkopf ein Übergangsbereich befindet, der einen kleineren Außendurchmesser als der Gewindekörper hat.

Derartige Abscherschrauben sind in verschiedenen Bauformen bekannt und werden beispielsweise dazu verwendet, Kabel in Schraubverbindern oder Kabelverbindungsklemmen in zuverlässiger Weise zu befestigen. Solche Abscherschrauben haben einen Übergangsbereich, der eine Sollbruchstelle, an der der Abreißkopf dann abreißt, wenn beim Anziehen der Abscherschraube ein vorgegebenes Drehmoment erreicht bzw. überschritten wird, aufweist.

Auf diese Weise ist sichergestellt, daß die Adern eines Kabels in einer Kabelklemme einerseits mit ausreichender Kraft angepreßt und festgehalten werden, andererseits solche Adern des Kabels nicht beschädigt oder durchgequetscht werden können, wenn zu große Anzugsdrehmomente verwendet werden. Das Abreißen des Abreißkopfes zeigt nämlich, daß eine ausreichend große Anpreßkraft aufgewendet worden ist, die durch die Sollbruchstelle so eingestellt worden ist, daß keine Beschädigung der Leiter oder Adern eines Kabels eintreten können.

Bei solchen Abscherschrauben kann aber in der Praxis das Problem auftreten, daß nach dem Abscheren des Abreißkopfes an der abgescherten Sollbruchstelle eine rauhe Oberfläche an der Oberseite des Gewindekörpers stehenbleibt, die scharfkantige Grate hat. Da diese Bruchfläche am Gewindekörper zugleich das äußere bzw. obere Ende des Gewindekörpers und damit des wirksamen Teiles der eigentlichen Schraube bildet, ergeben sich aus dieser Konstellation Nachteile bei der weiteren Handhabung.

Einerseits besteht Verletzungsgefahr für einen Benutzer oder Monteur, andererseits werden häufig Schrumpfschläuche auf Elektroarmaturen mit derartigen montierten Schrauben aufgeschrumpft, so daß solche rauhen und/oder scharfkantigen Bruchflächen mit ihrer naturgemäß unbearbeiteten Oberflächenstruktur solche Schrumpfschläuche verletzen können, mit der Folge, daß diese leicht einreißen. Ein weiterer Nachteil kann dann auftreten, wenn Aufschiebeteile bzw. Isolierteile über solchen Anordnungen montiert werden, beispielsweise bei Kabel-Verbindungsmuffen. Dann können nämlich durch die rauhe Sollbruchstelle Verletzungen an der Oberfläche der Kunststoff-Isolierteile auftreten, mit der Folge, daß die Spannungsfestigkeit der Armatur verringert wird. An solchen Kratzern können beispielsweise Glimmentladungen und Spannungsdurchschläge verursacht werden.

Der Erfindung liegt daher die Aufgabe zugrunde, eine Abscherschraube der eingangs genannten Art anzugeben, die eine verbesserte und sicherere Handhabung bei ihrer Verwendung gewährleistet.

Mit der erfindungsgemäßen Abscherschraube wird das Problem in zufriedenstellender Weise gelöst. Dadurch, daß in Achsenrichtung der Schraube die Sollbruchstelle und damit die entstehende Bruchfläche tiefer liegt als das obere Ende des Gewindekörpers, können Verletzungen von Monteuren und zu montierenden Armaturen in zuverlässiger Weise vermieden werden.

Dies wird vorzugsweise dadurch erreicht, daß der Übergangsbereich in einer in Umfangsrichtung verlaufenden Abscherrille endet, die dann die Bruchfläche definiert. Der Übergangsbereich selbst kann sich vom Abreißkopf zum Gewindekörper hin zylindrisch erstrecken, vorzugsweise ist er aber sich zunehmend verjüngend bis zur Abscherrille ausgebildet.

In Weiterbildung der erfindungsgemäßen Schraube ist vorgesehen, daß der Übergangsbereich von einem kegelstumpfartigen Körper gebildet ist, dessen Außenkontur im Querschnitt eine gegenüber der Achse der Abscherschraube schräg verlaufende Gerade oder bogenförmig verlaufende Kurve ist. Derartige Konturen lassen sich fertigungstechnisch einfach herstellen und ermöglichen eine exakte Einstellung der Sollbruchstelle bzw. des Drehmomentes, bei dem der Abreißkopf der Abscherschraube zuverlässig abschert.

In Weiterbildung der erfindungsgemäßen Schraube ist vorgesehen, daß der Übergangsbereich an seinem unteren Ende in eine Schrägfläche im Gewindekörper übergeht und daß die Schrägfläche gegenüber der Achse der Abscherschraube eine größere Neigung als der Übergangsbereich hat und zusammen mit dem Übergangsbereich die Abscherrille bildet. Derartige Schrägflächen lassen sich in einfacher Weise in ein Stangenmaterial einarbeiten, aus dem die Abscherschrauben geformt werden.

Besonders zweckmäßig ist es, wenn bei der erfindungsgemäßen Schraube das obere Ende des Gewindekörpers als ringförmiger Wulst ausgebildet ist, der die Abscherrille in Umfangsrichtung umgibt und dessen dem Abreißkopf zugewandte Oberfläche geschlichtet ist. Der Wulst bildet somit einen äußeren Schutz gegenüber der Abscherrille und steht, in axialer Richtung der Schraube gesehen, über deren Bruchfläche nach außen vor. Die Oberfläche ist glatt ausgebildet, nämlich geschlichtet oder gegebenenfalls auch poliert, so daß diese glatte Oberfläche ein Aufschieben von Isolierteilen oder Schrumpfschläuchen erleichtert, ohne daß diese beschädigt werden.

Bei der erfindungsgemäßen Schraube wird die Abscherrille von zwei Flächen gebildet, die sich unter einem Winkel von etwa 10° bis 60° schneiden. Auf diese Weise kann die Abscherschraube in einfacher Weise als Drehteil hergestellt werden.

Bei einer speziellen Ausführungsform der erfindungsgemäßen Schraube ist vorgesehen, daß das obere Ende des Gewindekörpers eine weitere Schrägfläche aufweist, die nach außen zu dem Außengewinde hin abfällt. Eine solche Konfiguration erleichtert das Aufschieben von Isolierteilen oder sonstigen Muffenteilen, ohne daß diese nach dem Abscheren des Abreißkopfes mit der Bruchfläche in Berührung kommen.

In Weiterbildung der erfindungsgemäßen Schraube ist vorgesehen, daß der Abreißkopf eine Innenausnehmung in Form eines Innenkantes, vorzugsweise eines Innensechskantes aufweist, der sich zumindest bis in den Übergangsbereich erstreckt. Derartige Schrauben lassen sich mit herkömmlichen Werkzeugen betätigen. Außerdem kann durch die Wandstärke zwischen dem Übergangsbereich und dem Innenkant das Drehmoment gut eingestellt werden, bei dem ein Abscheren des Abreißkopfes erfolgt.

In Weiterbildung der erfindungsgemäßen Schraube ist vorgesehen, daß der Innenkant sich mit gleichbleibendem Querschnitt über seine Tiefe vom Abreißkopf bis in den Gewindekörper erstreckt und daß der Übergangsbereich oberhalb der Abscherrille mindestens einen quer in den Innenraum des Innenkantes hineinragenden Vorsprung aufweist. Eine solche Innenausnehmung läßt sich in einem Arbeitsgang herstellen, was die Fertigung vereinfacht. Der Vorsprung bildet ein Auflager für ein einzusetzendes Werkzeug und zugleich eine Sperre, die zuverlässig verhindert, daß das Werkzeug zu weit eingesetzt wird.

Wenn eine solche Abscherschraube eingeschraubt wird, reißt der Abreißkopf bei einem bestimmten vorgegebenen Anzugsdrehmoment an der Sollbruchstelle des Übergangsbereiches ab. Wenn der Abreißkopf abgeschert ist, wird zugleich der in die Innenausnehmung hineinragende Vorsprung entfernt. Dann ist der Innenkant im Bereich des Gewindekörpers sofort frei zugänglich. Durch ein erneutes Ansetzen eines Werkzeuges kann dann der eingeschraubte Gewindekörper im Bedarfsfall wieder gelöst werden.

In Weiterbildung der erfindungsgemäßen Schraube ist vorgesehen, daß der jeweilige Vorsprung in der Verlängerung einer radial verlaufenden Vertiefung im Übergangsbereich ausgebildet ist. Dadurch läßt sich der jeweilige Vorsprung in besonders einfacher Weise positionieren.

Bei einer speziellen Ausführungsform der erfindungsgemäßen Schraube ist vorgesehen, daß der Vorsprung ein radial nach innen vorstehender, von außen eingeprägter oder eingepreßter Vorsprung ist. Dieser läßt sich in einfacher Weise mit einem Stanzwerkzeug oder einem Körnerschlag herstellen. Wenn dabei eine radial verlaufende Vertiefung im Übergangsbereich vorgesehen ist, kann diese in vorteilhafter Weise als Führung für das jeweilige Werkzeug dienen, um den jeweiligen Vorsprung herzustellen.

Bei einer anderen speziellen Ausführungsform der erfindungsgemäßen Schraube ist vorgesehen, daß der Vorsprung als Stift ausgebildet ist, der quer durch die Wand des Übergangsbereiches hindurchgeht und sich zumindest teilweise radial in den Innenraum des Innenkantes erstreckt. Der Stift kann sich dabei durch eine entsprechende radial verlaufende Vertiefung im Übergangsbereich erstrecken und den Innenraum des Innenkantes in radialer Richtung ganz oder teilweise durchsetzen.

In Weiterbildung der erfindungsgemäßen Schraube ist vorgesehen, daß der Gewindekörper an seinem vorderen Ende eine sphärisch ausgebildete Rundkuppe aufweist. Mit solchen Schrauben wird ein besonders guter mechanischer und elektrischer Kontakt mit einem anzuschließenden Teil gewährleistet, ohne daß dieses beim Anziehen der Abscherschraube beschädigt wird. Selbstverständlich ist es auch möglich, das vordere Ende mit einer anderen, geeigneten Form auszubilden, beispielsweise zylinderförmig, kegelstumpfförmig oder spitz zulaufend, wenn dies für den jeweiligen Anwendungsfall zweckmäßig ist.

Besonders vorteilhaft ist es, wenn bei der erfindungsgemäßen Schraube zumindest der Übergangsbereich und der Gewindekörper der Abscherschraube rotationssymmetrisch ausgebildet sind. Zusätzlich kann selbstverständlich auch der Abreißkopf rotationssymmetrisch ausgebildet sein. Auf diese Weise ist es möglich, die erfindungsgemäße Schraube aus einem Stangenmaterial herzustellen und die abgeschnittenen Stücke durch spanabhebende Bearbeitung in die gewünschte Konfiguration zu bringen.

Falls gewünscht, kann der Abreißkopf der erfindungsgemäßen Schraube an seinem Außenumfang (zusätzlich) einen Außenkant, vorzugsweise einen Außensechskant aufweisen, wenn die Verwendung eines entsprechenden, außen angreifenden Werkzeuges ermöglicht werden soll.

In Weiterbildung der erfindungsgemäßen Schraube ist vorgesehen, daß der Abreißkopf an seinem Außenumfang mindestens eine in Umfangsrichtung umlaufende Rille aufweist. Derartige Rillen können die Handhabung der Schraube erleichtern und zusätzlich als Markierungen dienen, um bestimmte mechanische Eigenschaften zu signalisieren, beispielsweise bestimmte Anzugsdrehmomente, bei denen der Abreißkopf abschert.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in
- Fig. 1: eine schematische Seitenansicht, teilweise im Längsschnitt, einer ersten Ausführungsform einer erfindungsgemäßen Abscherschraube;
- Fig. 2: eine der Fig. 1 entsprechende Seitenansicht, teilweise im Längsschnitt, nach dem Abscheren des Abreißkopfes;
- Fig. 3: eine der Fig. 1 ähnliche schematische Seitenansicht, teilweise im Längsschnitt, einer zweiten Ausführungsform der erfindungsgemäßen Abscherschraube; und in
- Fig .4: eine der Fig. 2 ähnliche Darstellung der zweiten Ausführungsform der Abscherschraube nach dem Abscheren des Abreißkopfes.

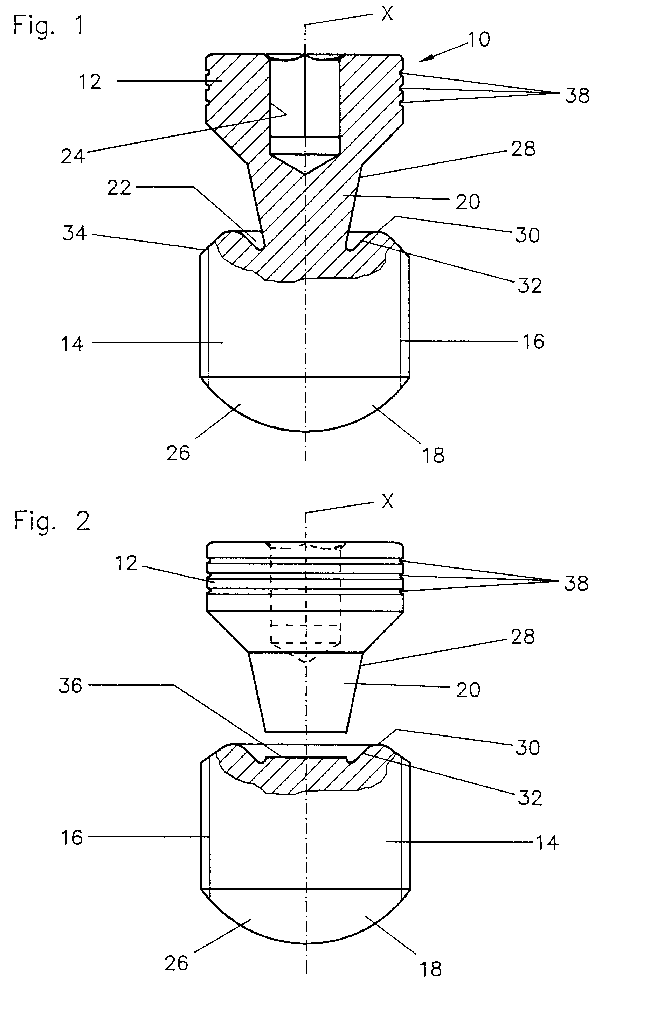

In Fig. 1 erkennt man eine Abscherschraube 10, die aus einem zylindrischen Rohling entstanden ist, der beispielsweise aus Messing oder einem anderen Metall bzw. einer anderen Legierung bestehen kann. Symmetrisch zur Mittelachse X sind von oben nach unten ein Abreißkopf 12, ein Übergangsbereich 20, eine Abscherrille 22, ein Gewindekörper 14 und eine Rundkuppe 18 mit einer sphärischen Kontaktfläche 26 am vorderen Ende der Abscherschraube 10 vorgesehen, wobei diese Teile zweckmäßigerweise rotationssymmetrisch um die Mittelachse X ausgebildet sind.

Bei der dargestellten Ausführungsform gemäß Fig. 1 geht der Abreißkopf 12 über eine Abschrägung in den Übergangsbereich 20 über, der als kegelstumpfartiger Körper ausgebildet ist, dessen Außenkontur 28 im Querschnitt eine gegenüber der Mittelachse X der Abscherschraube 10 schräg verlaufende Gerade oder bogenförmig verlaufende Kurve ist, die beispielsweise parabelförmig oder hyperbelförmig ausgebildet sein kann. Selbstverständlich braucht der Übergangsbereich nicht abgestuft ausgebildet zu sein, wie in Fig. 1 dargestellt, sondern kann von einer durchgehenden, schräg verlaufenden Linie begrenzt sein.

Wichtig ist in diesem Zusammenhang, daß sich der Übergangsbereich 20 vom Abreißkopf 12 zum Gewindekörper 14 hin zunehmend verjüngt und in einer Abscherrille 22 endet, die tiefer liegt als das dem Abreißkopf 12 zugewandte obere Ende 30 des Gewindekörpers 14. Zu diesem Zweck weist die Abscherschraube 10 eine Schrägfläche 32 auf, die gegenüber der Mittelachse X der Abscherschraube 10 eine größere Neigung hat als der Übergangsbereich 20 selbst. Die Außenkontur 28 des Übergangsbereiches 20 und die Schrägfläche 32 bilden dann miteinander die Abscherrille 22, deren Durchmesser entsprechend dem gewünschten maximalen Anzugsdrehmoment gewählt ist, bei dem der Abreißkopf 12 abscheren soll.

Die Schrägfläche 32 begrenzt somit auf der radial innen gelegenen Seite einen ringförmigen Wulst, der die Abscherrille 22 in Umfangsrichtung umgibt und dessen dem Abreißkopf 12 zugewandte Oberfläche geglättet ist, insbesondere geschlichtet ist. Falls gewünscht, kann diese Oberfläche auch feiner bearbeitet, beispielsweise poliert sein. Dieser Wulst bzw. sein oberes Ende 30 am Gewindekörper 14 hat zweckmäßigerweise eine weitere Schrägfläche 34, die nach außen zu einem Außengewinde 16 hin abfällt.

Die Höhe des Außengewindes 16 kann dann so eingestellt sein, daß es beim Einbau der Abscherschraube völlig in einem entsprechenden Innengewinde verschwindet, so daß nach dem Anziehen der Abscherschraube 10 und dem Abscheren des Abreißkopfes 12 nur die glatte Oberfläche des oberen Endes 30 von außen zugänglich ist und ein Aufschieben von Schrumpfschläuchen oder sonstigen Isolierteilen erleichtert.

In Fig. 1 erkennt man weiterhin einen schematisch angedeuteten Innenkant 24, beispielsweise einen Innensechskant, der zur Aufnahme eines Werkzeuges dient, um die Abscherschraube zu betätigen. Alternativ oder zusätzlich kann am Abreißkopf 12 ein nicht dargestellter Außenkant, insbesondere ein Außensechskant vorgesehen sein, wenn die Verwendung eines entsprechenden, außen angreifenden Werkzeuges ermöglicht werden soll.

Bei dem dargestellten Ausführungsbeispiel gemäß Fig. 1 beträgt der Winkel zwischen der Außenkontur 28 und der Schrägfläche 32 etwa 30°, jedoch kann dieser Winkel ganz allgemein in der Größenordnung zwischen 10° und 60° liegen, um die Position der Abscherrille in bezug auf das obere Ende 30 des Gewindekörpers 14 exakt festzulegen, damit die Bruchfläche 36 nach dem Abscheren des Abreißkopfes 12 in zuverlässiger Weise unterhalb des oberen Endes 30 liegt. Dann ist gewährleistet, daß diese Bruchfläche mit ihrer unbearbeiteten Oberflächenstruktur bei der weiteren Verwendung und Verarbeitung keine Gefährdung hervorrufen kann. Dieser Abstand zwischen der Bruchfläche 36 und dem oberen Ende 30 wird zweckmäßigerweise in der Größenordnung von einigen Millimetern liegen.

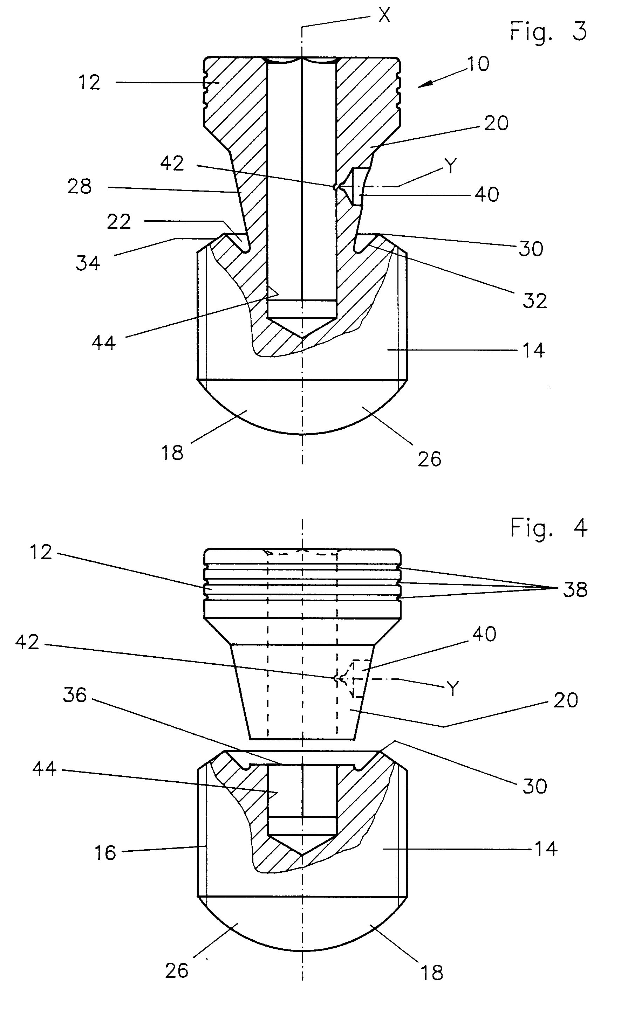

Die zweite Ausführungsform gemäß Fig. 3 und 4 ist im Prinzip ähnlich aufgebaut. In diesem Falle ist allerdings der Innenkant 44 mit gleichbleibendem Querschnitt über seine Tiefe vom Abreißkopf 12 bis in den Gewindekörper 14 hinein ausgebildet, wobei der Übergangsbereich 20 oberhalb der Abscherrille 22 mindestens einen quer in den Innenraum des Innenkantes 44 hineinragenden Vorsprung 42 aufweist. Wie in Fig. 3 und 4 dargestellt, kann der jeweilige Vorsprung 42 in der Verlängerung einer radial verlaufenden Vertiefung 40 längs einer Querachse Y im Übergangsbereich 20 ausgebildet sein. Insbesondere kann es sich bei dem Vorsprung um einen radial nach innen vorstehenden, von außen eingeprägten oder eingepreßten Vorsprung 42 handeln. Die sich in Richtung der Querachse Y verjüngende Vertiefung 40 kann dabei als Führung für ein Werkzeug dienen, um diesen Vorsprung einzupressen oder einzuprägen.

Bei einer anderen nicht dargestellten Ausführungsform kann ein solcher Vorsprung auch als Stift ausgebildet sein, der quer durch die Wand des Übergangsbereiches 20 hindurchgeht und der sich zumindest teilweise radial in Richtung der Querachse Y in den Innenraum des Innenkantes 44 erstreckt.

Während nur ein solcher Vorsprung 42 in Fig. 3 und 4 angedeutet ist, können selbstverständlich auch zwei oder mehr derartige Vorsprünge 42 vorgesehen sein, die sich zweckmäßigerweise etwa auf der gleichen Höhe in Umfangsrichtung um die Mittelachse X herum befinden können.

Unabhängig davon, ob der jeweilige Vorsprung 42 durch Materialverformung warzenförmig oder durch Einschlagen eines Stiftes gebildet ist, wird der einheitlich ausgebildete Innenkant 44 in zwei Bereiche unterteilt, und zwar an einer vorgegebenen Stelle oberhalb der Abscherrille 22. Damit ist sichergestellt, daß ein Betätigungswerkzeug für die Abscherschraube 10 sowohl zum Einschrauben der Abscherschraube 10 als auch zum etwaigen Lösen des eingeschraubten Gewindekörpers 14 eine ausreichend große Angriffsfläche zur Verfügung hat, wobei das Werkzeug bei beiden Montagevorgängen ausreichend weit eingesetzt werden kann.

Derartige Vorsprünge 42 lassen sich in einfacher Weise anbringen, sie verhindern aber dennoch in zuverlässiger Weise, daß ein Werkzeug zum Montieren der Abscherschraube 10 zu weit eingesetzt werden kann. Fehlbedienungen können dadurch zuverlässig ausgeschlossen werden. Ist die Abscherschraube 10 montiert worden und hat die Kraft zum Einschrauben den vorgegebenen Grenzwert überschritten, so schert der Abreißkopf 12 zusammen mit dem Übergangsbereich 20 an der Abscherrille 22 ab, wobei die jeweiligen Vorsprünge 42 in diesem abgetrennten Teil bleiben. Der Bereich des Innenkantes 44 unterhalb der Abscherrille 22 kann dann verwendet werden, um den eingeschraubten Teil der Abscherschraube 10, also den festgeklemmten Gewindekörper 14 wieder zu lösen.

Auch bei der Ausführungsform gemäß Fig. 3 und 4 ist sichergestellt durch die Formgebung des Übergangsbereiches 20 und der Positionierung der Abscherrille 22, daß die Bruchfläche 36 deutlich unterhalb des oberen Endes 30 des Gewindekörpers 14 liegt und damit keine unerwünschten Schäden anrichten kann.

Im oberen Bereich des Abreißkopfes 12 erkennt man einige in Umfangsrichtung umlaufende Rillen 38, die einerseits die Handhabung der Abscherschraube während ihrer Herstellung erleichtern. Zugleich können diese Rillen 38 dazu dienen, die jeweiligen Abscherschrauben 10 hinsichtlich ihrer technischen Eigenschaften zu klassifizieren, insbesondere im Hinblick auf das maximale Anzugsdrehmoment, bei dem der Übergangsbereich an der Abscherrille 22 als Sollbruchstelle abschert.

Aus den vorstehenden Darlegungen ergibt sich, daß eine Abscherschraube 10 zur Verfügung steht, die eine zuverlässige und sichere Handhabung gewährleistet und die gleichwohl ein zuverlässiges Abscheren des Abreißkopfes an der Sollbruchstelle gewährleistet, ohne daß die Bruchfläche an der Sollbruchstelle bei der weiteren Handhabung Probleme hervorruft.

## Patentansprüche

1. Abscherschraube, mit einem Gewindekörper (14) mit einem Außengewinde (16), und mit einem Abreißkopf (12) mit Angriffsfläche für ein Werkzeug, wobei sich zwischen dem Gewindekörper (14) und dem Abreißkopf (12) ein Übergangsbereich (20) befindet, der einen kleineren Außendurchmesser als der Gewindekörper (14) hat,
dadurch gekennzeichnet,
daß der Übergangsbereich (20) derart ausgebildet und in den Gewindekörper (14) hineinverlaufend angeordnet ist, daß bei einem Abdrehen des Abreißkopfes (12) eine Bruchstelle (36) entsteht, die tiefer liegt als das dem Abreißkopf (12) zugewandte obere Ende (30) des Gewindekörpers (14).

2. Abscherschraube nach Anspruch 1,
dadurch gekennzeichnet,
daß der Übergangsbereich (20) sich vom Abreißkopf (12) zum Gewindekörper (14) zunehmend verjüngt und in einer in Umfangsrichtung verlaufenden Abscherrille (22) endet.

3. Abscherschraube nach einem der Ansprüche 1 oder 2,
dadurch gekennzeichnet,
daß der Übergangsbereich (20) von einem kegelstumpfartigen Körper gebildet ist, dessen Außenkontur (28) im Querschnitt eine gegenüber der Achse (X) der Abscherschraube (10) schräg verlaufende Gerade oder bogenförmig verlaufende Kurve ist.

4. Abscherschraube nach einem der Ansprüche 1 bis 3,
dadurch gekennzeichnet,
daß der Übergangsbereich (20) an seinem unteren Ende in eine Schrägfläche (32) im Gewindekörper (14) übergeht und daß die Schrägfläche (32) gegenüber der Achse (X) der Abscherschraube (10) eine größere Neigung als der Übergangsbereich (20) hat und zusammen mit dem Übergangsbereich (20) die Abscherrille (22) bildet.

5. Abscherschraube nach einem der Ansprüche 1 bis 4,
dadurch gekennzeichnet,
daß das obere Ende (30) des Gewindekörpers (14) als ringförmiger Wulst ausgebildet ist, der die Abscherrille (22) in Umfangsrichtung umgibt und dessen dem Abreißkopf (12) zugewandte Oberfläche geschlichtet ist.

6. Abscherschraube nach einem der Ansprüche 1 bis 5,
dadurch gekennzeichnet,
daß die Abscherrille (22) von zwei Flächen gebildet wird, die sich unter einem Winkel von etwa 10° bis 60° schneiden.

7. Abscherschraube nach einem der Ansprüche 1 bis 6,
dadurch gekennzeichnet,
daß das obere Ende (30) des Gewindekörpers (14) eine weitere Schrägfläche (34) aufweist, die nach außen zu dem Außengewinde (16) hin abfällt.

8. Abscherschraube nach einem der Ansprüche 1 bis 7,
dadurch gekennzeichnet,
daß der Abreißkopf (12) eine Innenausnehmung in Form eines Innenkantes (24, 44), vorzugsweise eines Innensechskantes aufweist, der sich zumindest bis in den Übergangsbereich (20) erstreckt.

9. Abscherschraube nach Anspruch 8,
dadurch gekennzeichnet,
daß der Innenkant (44) sich mit gleichbleibendem Querschnitt über seine Tiefe vom Abreißkopf (12) bis in den Gewindekörper (14) erstreckt und daß der Übergangsbereich (20) oberhalb der Abscherrille (22) mindestens einen quer in den Innenraum des Innenkantes hineinragenden Vorsprung (42) aufweist.

10. Abscherschraube nach Anspruch 9,
dadurch gekennzeichnet,
daß der jeweilige Vorsprung (42) in der Verlängerung einer radial verlaufenden Vertiefung (40) im Übergangsbereich (20) ausgebildet ist.

11. Abscherschraube nach Anspruch 9 oder 10,
dadurch gekennzeichnet,
daß der Vorsprung ein radial nach innen vorstehender, von außen eingeprägter oder eingepreßter Vorsprung (42) ist.

12. Abscherschraube nach Anspruch 9 oder 10,
dadurch gekennzeichnet,
daß der Vorsprung als Stift ausgebildet ist, der quer durch die Wand des Übergangsbereiches (20) hindurchgeht und sich zumindest teilweise radial in den Innenraum des Innenkantes erstreckt.

13. Abscherschraube nach einem der Ansprüche 1 bis 12,
dadurch gekennzeichnet,
daß der Gewindekörper (14) an seinem vorderen Ende eine sphärisch ausgebildet Rundkuppe (18) aufweist.

14. Abscherschraube nach einem der Ansprüche 1 bis 13,
dadurch gekennzeichnet,
daß zumindest der Übergangsbereich (12) und der Gewindekörper (14) der Abscherschraube (10) rotationssymmetrisch ausgebildet sind.

15. Abscherschraube nach einem der Ansprüche 1 bis 14,
dadurch gekennzeichnet,
daß der Abreißkopf (12) an seinem Außenumfang einen Außenkant, vorzugsweise einen Außensechskant aufweist.

16. Abscherschraube nach einem der Ansprüche 1 bis 15,
dadurch gekennzeichnet,
daß der Abreißkopf (12) an seinem Außenumfang mindestens eine in Umfangsrichtung umlaufende Rille (38) aufweist.
